# EUROPEAN PATENT APPLICATION

(11) **EP 4 718 536 A1**
(43) Date of publication of application: **01.04.2026**
(21) Application number: 24881384.2
(22) Date of filing: 30.09.2024
(51) Int. Cl.: H01M 4/525, H01M 4/505, H01M 4/131, H01M 10/054, C01G 53/00

(54) **SODIUM ION BATTERY POSITIVE ELECTRODE MATERIAL, AND PREPARATION METHOD THEREFOR AND USE THEREOF**

(30) Priority: 25.10.2023 CN 202311390637
(71) Applicant: Ningbo Ronbay New Energy Technology Co., Ltd., Yuyao Ningbo, Zhejiang 315402 (CN)
(72) Inventor: SUN, Guozheng, Ningbo, Zhejiang 315402 (CN); ZHANG, Wenfei, Ningbo, Zhejiang 315402 (CN); XU, Jiankang, Ningbo, Zhejiang 315402 (CN); WANG, Zunzhi, Ningbo, Zhejiang 315402 (CN); YU, Jian, Ningbo, Zhejiang 315402 (CN); LIU, Rui, Ningbo, Zhejiang 315402 (CN)
(74) Representative: Bandpay & Greuter
(86) International application number: PCT/CN2024/123056
(87) International publication number: WO 2025/087018

(57) **Abstract**

A positive electrode material for a sodium-ion battery, and a preparation method thereof and use thereof, where the positive electrode material for the sodium-ion battery has a chemical general formula NaₐNi_{b}Fe_{c}Mn_{d}M_{c}A_{f}O₂, where the element M and the element A are doping elements, M-O of the element M has a bond energy of greater than 500 kJ/mol, the element A has an ionic radius of greater than or equal to 0.06 nm, and the element A has a valence state of +3 of higher, and a XRD pattern of the positive electrode material for the sodium-ion battery is free of impurity phase diffraction peak in a range of 42.5°-43.5°. The element M is doped at a position of an interstitial atom, which can confine oxygen and restrict oxygen release in a desodiation state, and the element A can preferentially replace a transition metal at a transition metal site, playing a supporting role, and thus improving the gas generation problem of the positive electrode material for the sodium-ion battery during cycling.

## Description

The present application claims priority to Chinese patent application No. 202311390637.1 filed with China National Intellectual Property Administration on October 25, 2023 and entitled "Positive Electrode Material for Sodium Ion Battery, and Preparation Method Thereof and Use Thereof", which is hereby incorporated by reference in its entirety.

### TECHNICAL FIELD

The present application relates to the technical field of positive electrode materials for sodium-ion batteries, and in particular to positive electrode material for a sodium-ion battery and a preparation method thereof and use thereof.

### BACKGROUND

In recent years, the new energy industry has developed rapidly, and sodium-ion batteries have attracted much attention due to their low cost, simple preparation methods, and excellent performance. Among them nickel-iron-manganese polycrystalline materials have been increasingly studied due to their good processability, high capacity and good cycle and the like. However, the nickel-iron-manganese polycrystalline materials produce excessive gas during cycling, which affects their large-scale application.

In the sodium-ion batteries, a layered oxide positive electrode material has a main reaction of intercalation and deintercalation of sodium ions. When sodium ions are intercalated into the layered oxide positive electrode material from the electrolyte, the structure of the positive electrode material changes, and the layered oxide layers expand outward to form gaps. This process can lead to volume expansion of and stress accumulation in the positive electrode material, thereby affecting the cycle life and safety performance of the batteries.

When sodium ions are deintercalated from the layered oxide positive electrode material, the structure of the positive electrode material returns to its original state, and the layered oxide layers are stacked together again. However, due to volume change of the positive electrode material, not only the internal pressure of the batteries is increased, which causes gas generation from the positive electrode material, but also the interface between the positive electrode material and the electrolyte may fracture, which causes gas generation from the electrolyte.

The gas generation has a certain impact on the performance and safety of the sodium-ion battery. Firstly, the gas generation increases the pressure inside the battery, which may lead to swelling, deformation, or even explosion of the battery. Secondly, the gas generation occupies the available space inside the battery, reducing the energy density of the battery. Moreover, the gas generation further leads to a decrease in battery's life, as the gas hinders the intercalation and deintercalation processes of sodium ions.

Presently, the methods to address this problem include changing the structure of the layered electrode or changing the composition of the electrolyte. The former can better accommodate the volume change during the intercalation and deintercalation processes of sodium ions. The latter involves selecting an electrolyte with high solubility and low gas generation rate to minimize gas generation phenomena. In addition, the problem of the gas generation during cycling can be improved by using a water-washing method or reducing the operating voltage. However, the water-washing process will complicate the preparation process and increase the manufacturing cost; and reducing the operating voltage will reduce the capacity and affect the energy density of the cell.

In view of this, the present application is hereby provided.

### SUMMARY

A first object of the present application is to provide a positive electrode material for a sodium-ion battery, where the gas generation problem of the positive electrode material during cycling is improved by doping two doping elements with different properties. A M-O bond of an element M has a bond energy of greater than 500 kJ/mol, and an element A has an ionic radius of greater than or equal to 0.06 nm and a valence state of +3 or higher. The function of the element M is to be doped at a position of an interstitial atom, to confine oxygen and restrict oxygen release in a desodiation state. The doping of the element A may preferentially replace a transition metal at a transition metal site, playing a supporting role in the internal structure of the layered material and thus improving the gas generation problem of the sodium-ion positive electrode material during cycling.

A second object of the present application is to provide a preparation method for the above positive electrode material for the sodium-ion battery. The method includes mixing a first additive containing an element M and a second additive containing an element A with a nickel-iron-manganese precursor material and a sodium source, and then sintering to dope the two elements therein, which improves the gas generation problem of the positive electrode material for the sodium-ion battery during cycling, thereby obtaining a positive electrode material for a sodium-ion battery with better comprehensive performance.

A third object of the present application is to provide a positive electrode sheet for a sodium-ion battery including the above-mentioned positive electrode material for a sodium-ion battery, which positive electrode sheet can effectively improve the gas generation problem during cycling.

A fourth object of the present application is to provide a sodium-ion battery including the above positive electrode sheet for a sodium-ion battery, which sodium-ion battery uses the positive electrode sheet as described herein, improving the gas generation problem during cycling, and thereby improving the performance and safety of the sodium-ion battery.

A fifth object of the present application is to provide an electrical device using the above sodium-ion battery.

In order to achieve the above objects of the present application, the following technical solutions are adopted.

The present application provides a positive electrode material for a sodium-ion battery, which has a chemical general formula NaₐNi_{b}Fe_{c}Mn_{d}M_{c}A_{f}O₂, where 0.85≤a≤1.1, 0.1≤b≤0.5, 0.1≤c≤0.4, 0.1≤d≤0.4, 0.001≤e≤0.02, 0.001≤f≤0.02; the element M and the element A are doping elements, a M-O bond of the element M has a bond energy of greater than 500 kJ/mol, the element A has an ionic radius of greater than or equal to 0.06 nm, and the element A has a valence state of +3 of higher; a XRD pattern of the positive electrode material for the sodium-ion battery is free of impurity phase diffraction peak in a range of 42.5°-43.5°.

Preferably, the bond energy of the M-O bond of the element M is greater than 700 kJ/mol.

Preferably, the ionic radius of the element A is 0.06 nm-0.11 nm.

Preferably, the impurity phase diffraction peak is a NiO diffraction peak and/or a ZnO diffraction peak.

Preferably, the element M includes at least one of Al, Nb, Mg, Si, W and Ti.

Preferably, the element M includes at least two of Al, Nb, Mg, Si, W and Ti.

Preferably, the element A includes at least one of Y, Zr, Nb, Sb, Te, La, Ce and Ta.

Preferably, in the positive electrode material for the sodium-ion battery, a Na-O interlayer spacing is 3.30 Å - 3.50 Å.

Preferably, the positive electrode material for the sodium-ion battery further includes a coating layer at least partially covering a surface of the material having the chemical general formula NaₐNi_{b}Fe_{c}MnₐM_{c}A_{f}O₂.

Preferably, the coating layer includes at least one of Al₂O₃, WO₃, SrO, CeO₂ and TiO₂.

Preferably, the coating layer has a thickness of less than or equal to 50 nm.

Preferably, a ratio of D10 particle diameter after roll pressing by a 3T pressure roller to D10 particle diameter before roll pressing is greater than or equal to 0.73.

The present application provides a preparation method of the positive electrode material for the sodium-ion battery as described herein, including the following steps:
mixing a nickel-iron-manganese precursor, a sodium source, a first additive containing an element M and a second additive containing an element A, and then sintering, to obtain the positive electrode material for the sodium-ion battery;
where the sintering specifically includes: a first heat preservation sintering at 600°C-750°C, a second heat preservation sintering at 850°C-920°C, and a third heat preservation sintering at 930°C-980°C.

Preferably, a temperature of the first heat preservation sintering is 600°C-700°C, and a temperature of the second heat preservation sintering is 850°C-900°C.

Preferably, a time of the heat preservation sintering is 1 h-3 h.

Preferably, a time of the second heat preservation sintering is 1 h-3 h.

Preferably, a time of the third heat preservation sintering is 12 h - 16 h.

Preferably, after the third heat preservation sintering, the preparation method further includes: crushing the sintered material, adding the coating layer material thereto and performing a fourth heat preservation sintering.

Preferably, a temperature of the fourth heat preservation sintering is 400°C-450°C.

Preferably, a time of the fourth heat preservation sintering is 12 h - 16 h.

The present application provides a positive electrode sheet for a sodium-ion battery, including the above positive electrode material for the sodium-ion battery.

The present application provides a sodium-ion battery, including above the positive electrode sheet for the sodium-ion battery.

The present application provides an electrical device, including the above sodium-ion battery.

Compared with the prior art, the present application has the following beneficial effects:
(1) In the positive electrode material for the sodium-ion battery provided by the present application, two doping elements with different properties are doped, which improves the gas generation problem of the positive electrode material during cycling. Where the M-O bond of the element M has a bond energy of greater than 500 kJ/mol, and the element A has an ionic radius of greater than or equal to 0.06 nm and a valence state of +3 or higher. The function of the element M is to be doped at a position of an interstitial atom, to confine oxygen and restrict oxygen release in desodiation state. The doping of the element A may preferentially replace a transition metal at a transition metal site, playing a supporting role in the internal structure of the layered material, and thus improving the gas generation problem of the sodium-ion positive electrode material during cycling.
(2) In the positive electrode material for the sodium-ion battery provided by the present application, by the characteristics of the site-occupying effect of the element A and the absence of the impurity phase diffraction peaks of the positive electrode material in the range of 42.5°-43.5° in the XRD pattern, the positive electrode material has a stable structure, good Na-O interlayer spacing, achieving a better cycle performance and improving the gas generation problem of the positive electrode material in the product process.
(3) In the positive electrode material for the sodium-ion battery provided by the present application, since the element A is a high-valence ion, Ni in the positive electrode material tends to be present as Ni²⁺, increasing the content of Ni²⁺ that can change valence state, thereby improving the capacity of the positive electrode material.
(4) The positive electrode material for the sodium-ion battery provided by the present application further includes a dense coating layer, which can inhibit the erosion of the positive electrode material by the electrolyte.
(5) In the preparation method of the positive electrode material for the sodium-ion battery provided by the present application, the first additive containing the element M and the second additive containing the element A are mixed with the nickel-iron-manganese precursor material and the sodium source and then followed by sintered, allowing the two elements to be doped therein, improving the gas generation problem of the positive electrode material for the sodium-ion battery during cycling, thereby obtaining a positive electrode material for a sodium-ion battery with better comprehensive performance.
(6) In the preparation method of the positive electrode material for the sodium-ion battery provided by the present application, the sintering includes three heat preservation sintering processes, where the first heat preservation sintering process is mainly used for eliminating Fe₂O₃ and Mn₃O₄ impurity phases, the second heat preservation sintering process is mainly used for eliminating NiO/ZnO impurity peaks, and the third heat preservation sintering process mainly plays a role of solid solution.

### BRIEF DESCRIPTION OF DRAWINGS

In order to illustrate the technical solutions in the embodiments of the present application or in the prior art more clearly, the accompanying drawings required for descripting the embodiments or the prior art will be briefly introduced hereinafter. It is obvious that the accompanying drawings in the following description are some embodiments of the present application. For those skilled in the art, other accompanying drawings can also be obtained based on these accompanying drawings without creative labor.
FIG. 1 is a XRD pattern of Example 1.
FIG. 2 is a XRD pattern of Example 2.
FIG. 3 is a XRD pattern of Comparative Example 1.
FIG. 4 is a XRD pattern of Comparative Example 2.
FIG. 5 is a XRD pattern of Comparative Example 9.

### DESCRIPTION OF EMBODIMENTS

The technical solutions of the present application will be described clearly and completely in combination with the accompanying drawings and the specific embodiments. However, those skilled in the art will understand that the examples described hereinafter are some but not all of the examples of the present application, and are only used for the purpose of illustrating the present application, and should not be regarded as limiting the scope of the present application. Based on the examples in the present application, all other examples obtained by those skilled in the art without creative labor fall within the protection scope of the present application. The specific conditions not specified in the examples are conventional conditions or the conditions recommended by the manufacturer. Reagents or instruments not specified with manufacturers are all commercially available conventional products.

Unless otherwise specified, the terms "include" and "comprise" used in the present application may be used in an open sense, and may also be used in a closed sense. For example, the terms "include" and "comprise" may mean that other components not listed may further be included or comprised, and may also mean that only the listed components are included or comprised.

Unless otherwise specified, in the present application, the term "or" is inclusive. For example, the phrase "A or B" means "A, B, or both A and B". More specifically, each of the following conditions satisfies the condition "A or B": A is true (or exists) and B is false (or does not exist); A is false (or does not exist) and B is true (or exists); or both A and B are true (or exist).

Unless otherwise specified, in the present application, the term "one or more" or "at least one" refer to any one, any two, or any combination of the listed items. The term "multiple" means any two or more.

Unless otherwise specified, in the present application, the terms "first aspect", "second aspect", "third aspect", "fourth aspect" and the like are used for illustration purposes only and are not to be interpreted as indicating or implying relative importance or quantity, nor are they to be interpreted as implicitly indicating importance or quantity of the technical features indicated. Moreover, the terms "first", "second", "third", "fourth" and the like are used merely for non-exhaustive enumeration and description, and should not be construed as imposing a closed limitation on quantity.

In a first aspect, the present application provides a positive electrode material for a sodium-ion battery based on the consideration of the gas generation problem of the sodium-ion positive electrode material, the optimization of the selection of doping elements and the improvement of the stability of the layered positive electrode material. The positive electrode material for the sodium-ion battery has a chemical general formula NaₐNi_{b}Fe_{c}Mn_{d}MₑA_{f}O₂, where 0.85≤a≤1.1, 0.1≤b≤0.5, 0.1≤c≤0.4, 0.1≤d≤0.4, 0.001≤e≤0.02, 0.001≤f≤0.02, the element M and the element A are doping elements, a M-O bond of the element M has a bond energy of greater than 500 kJ/mol, the element A has an ionic radius of greater than or equal to 0.06 nm, and the element A has a valence state of +3 of higher. A XRD pattern of the positive electrode material for the sodium-ion battery is free of impurity phase diffraction peaks in a range of 42.5°-43.5°.

Where the doping element M may function as an interstitial atom in the layered material, confine oxygen at the position of the interstitial atom, and restrict oxygen release during cycling. For this function, the bond energy of the M-O of the element M is required to be greater than 500 kJ/mol. Doping of the element A can preferentially replace a transition metal at a transition metal site, playing a supporting role in the internal structure of the layered material, thereby improving the gas generation problem of the sodium-ion positive electrode material during cycling, furthermore, the element A has an ionic radius of greater than or equal to 0.06 nm and has a valence state of +3 or higher.

In addition, the XRD pattern of the positive electrode material for the sodium-ion battery has no impurity phase diffraction peak in the range of 42.5°-43.5°, which, combined with the positioning of the element A, results in a structurally stable positive electrode material, thereby reducing structural change during the deintercalation of sodium ions and achieving better cycle stability.

It can be understood that the term "no impurity phase diffraction peak" specifically refers to having no obvious impurity phase diffraction peak. Specifically, "obvious" refers to impurity phase diffraction peak having a peak intensity of greater than 300.

Further, the XRD pattern of the positive electrode material for the sodium-ion battery shows no obvious NiO and/or ZnO diffraction peaks in the range of 42.5°-43.5°. Furthermore, the valence stat of +3 or higher of the element A can also allow Ni in the positive electrode material to tend to be Ni²⁺, increasing the content of Ni²⁺ that can change valence state, thereby improving the capacity of the positive electrode material.

It can be understood that, in the above chemical general formula NaₐNi_{b}Fe_{c}Mn_{d}M_{c}A_{f}O₂, the value of a includes but is not limited to any one of point values 0.85, 0.9, 0.95, 1.0, 1.05 and 1.1, or a range value between any two of them; the value of b includes but is not limited to any one of point values 0.1, 0.2, 0.3, 0.4 and 0.5, or a range value between any two of them; the value of c includes but is not limited to any one of point values 0.1, 0.2, 0.3 and 0.4, or a range value between any two of them; the value of d includes but is not limited to any one of point values 0.1, 0.2, 0.3 and 0.4, or a range value between any two of them; the value of e includes but is not limited to any one of point values 0.001, 0.002, 0.005, 0.008, 0.01, 0.012, 0.014, 0.015, 0.018 and 0.02, or a range value between any two of them; and the value of f includes but is not limited to any one of point values 0.001, 0.002, 0.005, 0.008, 0.01, 0.012, 0.014, 0.015, 0.018 and 0.02, or a range value between any two of them.

In some embodiments, the M-O has a bond energy of greater than 500 kJ/mol, which includes but is not limited to any one of point values 500 kJ/mol, 700 kJ/mol, 700 kJ/mol, 800 kJ/mol, 900 kJ/mol, 1000 kJ/mol, 1100 kJ/mol, 1200 kJ/mol, 1300 kJ/mol, 1400 kJ/mol, 1500 kJ/mol, 1600 kJ/mol, 1700 kJ/mol, 1800 kJ/mol, 1900 kJ/mol and 2000 kJ/mol, or a range value between any two of them. Furthermore, the larger the bond energy of the M-O, the greater the confining effect on O. The M-O has a bond energy of greater than 700 kJ/mol. Further, the M-O has a bond energy of 700 kJ/mol-2000 kJ/mol.

In some embodiments, the ionic radius of the element A can also play an optimizing role in the structure of the layered material. Preferably, the ionic radius of the element A is 0.06 nm-0.11 nm, including but not limited to any one of point values 0.06 nm, 0.068 nm, 0.07 nm, 0.072 nm, 0.074 nm, 0.075 nm, 0.078 nm, 0.08 nm, 0.082 nm, 0.083 nm, 0.084 nm, 0.085 nm, 0.086 nm, 0.088 nm, 0.09 nm, 0.092 nm, 0.093 nm, 0.094 nm, 0.095 nm, 0.096 nm, 0.097 nm, 0.098 nm, 0.099 nm, 0.1 nm, 0.102 nm, 0.1032 nm, 0.0104 nm, 0.105 nm, 0.106 nm, 0.107 nm, 0.108 nm, 0.109 nm and 0.11 nm, or a range value between any two of them.

It can be understood that the XRD pattern of a traditional positive electrode material for a sodium-ion battery has NiO and/or ZnO diffraction peaks in the range of 42.5°-43.5°, where the presence of the NiO diffraction peak will reduce the capacity of the positive electrode material.

In some embodiments, the element M that meets the above conditions includes but is not limited to at least one of Al, Nb, Mg, Si, W and Ti. Furthermore, doping with the element M can be doping with a single element; or simultaneously doping with two, three, or four elements, and suitable combinations include, but are not limited to Al/Si, Al/Mg, Mg/W, Si/Ti, Ti/Nb, or W/Mg/Al. Preferably, the element M includes at least two of Al, Nb, Mg, Si, W and Ti, and the combination of two elements can enhance the confinement on oxygen, further reducing the amount of gas evolved during cycling of the positive electrode material.

In some embodiments, the element A that meets the above conditions includes but is not limited to at least one of Y, Zr, Nb, Sb, Te, La, Ce and Ta. Where doping with the element A may be doping with a single element; or simultaneously doping with two, three, or four elements, and suitable combinations include, but are not limited to Y/Zr, Nb/Y, Sb/Te, Ta/Ce and Y/Sb/Te.

In some embodiments, in the positive electrode material for the sodium-ion battery, since ions with a slightly larger radius are doped in the transition metal layer due to doping of the element A and simultaneously the generation of impurity phases is also reduced in the material, a material with a more stable structure is obtained.

Furthermore, the Na-O interlayer spacing is 3.30 Å - 3.50 Å, including but not limited to any one of point values 3.30 Å, 3.31 Å, 3.32 Å, 3.33 Å, 3.34 Å, 3.35 Å, 3.36 Å, 3.37 Å, 3.38 Å, 3.39 Å, 3.40 Å, 3.41 Å, 3.42 Å, 3.43 Å, 3.44 Å, 3.45 Å, 3.46 Å, 3.47 Å, 3.48 Å, 3.49 Å and 3.50 Å, or a range value between any two of them.

In some embodiments, the positive electrode material for the sodium-ion battery further includes a coating layer. The dense coating layer can inhibit the erosion of the positive electrode material by the electrolyte, thereby obtaining a positive electrode material for the sodium-ion battery with excellent comprehensive performance. Furthermore, a material of the coating layer includes but is not limited to at least one of Al₂O₃, WO₃, SrO, CeO₂ and TiO₂.

In some embodiments, the coating layer has a thickness of less than or equal to 50 nm, preferably 20 nm-50 nm, including but not limited to any one of point values 20 nm, 25 nm, 30 nm, 35 nm, 40 nm, 45 nm and 50 nm, or a range value between any two of them. Use of this thickness range ensures not only an electrical conductivity of an interface, but also uniformity of coating.

Furthermore, in some embodiments, for the positive electrode material for the sodium-ion battery provided by the present application, a ratio of D10 particle diameter after roll pressing by a 3T pressure roller to D10 particle diameter before roll pressing is greater than or equal to 0.73. A larger ratio indicates that there is a small change in the D10 particle diameter before and after roll pressing, which means that the material has a large hardness, a stable structure, and a high structural strength.

In a second aspect, the present application provides a preparation method of a positive electrode material for a sodium-ion battery, including the following steps:
mixing a nickel-iron-manganese precursor, a sodium source, a first additive containing an element M and a second additive containing an element A, and then sintering, to obtain the positive electrode material for the sodium-ion battery.

Where the sintering specifically includes: a first heat preservation sintering at 600°C-750°C, a second heat preservation sintering at 850°C-920°C, and a third heat preservation sintering at 930°C-980°C.

Further, in some embodiments, a temperature of the first heat preservation sintering is 600°C-700°C, and a temperature of the second heat preservation sintering is 850°C-900°C. The above sintering temperature can allow the battery prepared from the positive electrode material provided in the present application to have a lower gas generation amount.

In the preparation method of the positive electrode material for the sodium-ion battery provided by the present application, the first additive containing the element M and the second additive containing the element A are mixed with the nickel-iron-manganese precursor material and the sodium source, and then sintered to enable the two elements to be doped therein. This improves the gas generation problem of the positive electrode material for the sodium-ion battery during cycling, thereby obtaining a positive electrode material for the sodium-ion battery with better comprehensive performance.

In some embodiments, the sodium source includes, but is not limited to, at least one of sodium carbonate, sodium nitrate and sodium bicarbonate.

In some embodiments, the additive containing the element M includes an oxide, hydroxide, or salt containing the element M.

In some embodiments, the additive containing the element A includes an oxide, hydroxide, or salt containing the element A.

In some embodiments, the sintering is carried out in an oxygen-containing atmosphere.

In some embodiments, the present application is mainly configured to improve the performance of the layered positive electrode material by doping elements. A suitable nickel-iron-manganese precursor material includes but is not limited to Ni_{0.33}Fe_{0.33}Mn_{0.33}(OH)₂ precursor material, Ni_{0.4}Fe_{0.2}Mn_{0.4}(OH)₂ precursor material, N1_{0.2}Fe_{0.4}Mn_{0.4}(OH)₂ precursor material, Ni_{0.4}Fe_{0.3}Mn_{0.3}(OH)₂ precursor material and Ni_{0.25}Fe_{0.40}Mn_{0.35}(OH)₂ precursor material.

Herein, the first heat preservation sintering is mainly to control the generation of Fe₂O₃ and Mn₃O4 impurity phases, the second heat preservation sintering is to remove the NiO impurity phase, and the third heat preservation sintering mainly functions to achieve a solid solution action. Due to addition of the first heat preservation sintering and the second heat preservation sintering, the generation of impurity phases is reduced, which helps to improve ionic conductivity, and to improve the uniformity of the material prior to solid solution, enabling a more thorough solid solution reaction. Furthermore, it helps to increase the Na-O interlayer spacing, reduce the difficulty of sodium ion deintercalation, and improve a kinetics performance of the positive electrode material, thereby improving the capacity of the positive electrode material.

Based on the above reasons, a temperature of the first heat preservation sintering is 600°C-700°C, including but not limited to any one of point values 600°C, 630°C, 650°C, 680°C and 700°C, or a range value between any two of them; a temperature of the second heat preservation sintering is 850°C-900°C, including but not limited to any one of point values 850°C, 860°C, 870°C, 880°C, 890°C and 900°C, or a range value between any two of them; a temperature of the third heat preservation sintering is 930°C-980°C, including but not limited to any one of point values 930°C, 935°C, 940°C, 945°C, 950°C, 955°C, 960°C, 965°C, 970°C, 975°C and 980°C, or a range value between any two of them.

Furthermore, a time of the first heat preservation sintering is 1 h-3 h, including but not limited to any one of point values 1 h, 1.5 h, 2 h, 2.5 h and 3 h, or a range value between any two of them.

Furthermore, a time of the second heat preservation sintering is 1 h-3 h, including but not limited to any one of point values 1 h, 1.5 h, 2 h, 2.5 h and 3 h, or a range value between any two of them.

Furthermore, a time of the third heat preservation sintering is 12 h - 16 h, including but not limited to any one of point values 12 h, 13 h, 14 h, 15 h and 16 h, or a range value between any two of them.

In some embodiments, the first heat preservation sintering have a heating rate of 2 °C/min -5 °C/min, including but not limited to any one of point values 2 °C/min, 2.5 °C/min, 3 °C/min, 3.5 °C/min, 4 °C/min, 4.5 °C/min and 5 °C/min, or a range value between any two of them.

In some embodiments, the second heat preservation sintering have a heating rate of 2 °C/min -5 °C/min, including but not limited to any one of point values 2 °C/min, 2.5 °C/min, 3 °C/min, 3.5 °C/min, 4 °C/min, 4.5 °C/min and 5 °C/min, or a range value between any two of them.

In some embodiments, the third heat preservation sintering have a heating rate of 1 °C/min - 4 °C/min, including but not limited to any one of point values 1 °C/min, 1.5 °C/min, 2 °C/min, 2.5 °C/min, 3 °C/min, 3.5 °C/min and 4 °C/min, or a range value between any two of them.

In some embodiments, from the first heat preservation sintering to the second heat preservation sintering and then to the third heat preservation sintering, as the temperature of the heat preservation sintering gradually increases, the heating rate gradually decreases, so as to obtain a positive electrode material with more uniform crystal phases.

In some embodiments, the present application further includes a coating layer material. The sintered material and the coating layer material can be directly mixed to obtain a mixed system, and then the mixed system is calcined to coat the coating layer material on at least part of a surface of the sintered material to form the positive electrode material for the sodium-ion battery of the present application; alternatively, the sintered material can be dissolved in ethanol to obtain a first liquid phase, the coating layer material can be dissolved in the first liquid phase to obtain a mixed liquid phase, the mixed liquid phase is stirred and evaporated to obtain a mixed system, and then the mixed system is calcined to coat the coating layer material on at least part of a surface of the sintered material to form the positive electrode material for the sodium-ion battery of the present application; alternatively, the sintered material can be dissolved in ethanol to obtain a first liquid phase, the coating layer material is dissolved in ethanol to obtain a second liquid phase, the second liquid phase is added to the first liquid phase to obtain a mixed liquid phase, the mixed liquid phase is stirred and evaporated to obtain a mixed system, and then the mixed system is calcined to coat the coating layer material on at least part of a surface of the sintered material to form the positive electrode material for the sodium-ion battery of the present application.

As an example, after the third heat preservation sintering, the preparation method further includes: crushing the sintered material, adding the coating layer material thereto and performing a fourth heat preservation sintering.

In some embodiments, the fourth heat preservation sintering have a temperature of 400°C-450°C, including but not limited to any one of point values 400°C, 410°C, 420°C, 430°C, 440°C and 450°C, or a range value between any two of them. Furthermore, a time of the fourth heat preservation sintering is 12 h - 16 h, including but not limited to any one of point values 12 h, 13 h, 14 h, 15 h and 16 h, or a range value between any two of them.

Furthermore, after the fourth heat preservation sintering, the preparation method further includes the steps of sieving and iron removal of the sintered material.

In a third aspect, the present application provides a positive electrode sheet for a sodium-ion battery, including the positive electrode material for the sodium-ion battery.

It can be understood that the positive electrode sheet includes a positive electrode current collector and a positive electrode film layer disposed on at least one surface of the positive electrode current collector, and the positive electrode film layer includes the positive electrode material of the first aspect of the present application.

In some embodiments, the positive electrode current collector can be a metal foil or a composite current collector. For example, as the metal foil, an aluminum foil can be used. The composite current collector may include a polymer base layer and a metal layer formed on at least one surface of the polymer base layer. The composite current collector can be obtained by forming a metal material on the polymer base layer. Optionally, the metal material may include, but is not limited to, one or more of aluminum, aluminum alloy, nickel, nickel alloy, titanium, titanium alloy, silver and silver alloy. Optionally, the polymer base layer may include, but is not limited to, one or more of polypropylene (PP), polyethylene terephthalate (PET), polybutylene terephthalate (PBT), polystyrene (PS) and polyethylene (PE).

In some embodiments, the positive electrode film layer is mainly composed of the positive electrode material for the sodium-ion battery as described above, a binder and a conductive agent.

As an example, the binder may include at least one of polyvinylidene flouride (PVDF), polytetrafluoroethylene (PTFE), vinylidene fluoride-tetrafluoroethylene-propylene terpolymer, vinylidene flouride-fluoropropylene-tetrafluoroethylene terpolymer, tetrafluoroethylene-hexafluoropropylene copolymer and fluorinated acrylate.

As an example, the conductive agent may include at least one of carbon black, carbon dot, carbon nanotube, graphene and carbon nanofiber, where the carbon black includes superconducting carbon, acetylene black or Ketjen black.

In some embodiments, the positive electrode sheet can be prepared by the following way: dispersing the above components for preparing the positive electrode sheet, for example, the positive electrode material for the sodium-ion battery, the conductive agent, the binder and any other components, in a solvent to form a positive electrode slurry; coating the positive electrode slurry on the positive electrode current collector, and then drying, cold pressing and other processes to obtain the positive electrode sheet. Optionally, the solvent includes, but is not limited to, N-methylpyrrolidone.

In a fourth aspect, the present application provides a sodium-ion battery, including the positive electrode sheet for the sodium-ion battery.

In some embodiments, the sodium-ion battery is mainly composed of the positive electrode sheet for the sodium-ion battery described above, a negative electrode sheet, a separator and an electrolyte. Where, the negative electrode sheet, the separator and the electrolyte may be any conventional and commercially available negative electrode sheet (or negative electrode material), separator and electrolyte.

In a fifth aspect, the present application provides an electrical device, including the sodium-ion battery.

It is understood that the above-mentioned electrical device includes, but is not limited to, any devices using the above-mentioned sodium-ion battery, such as electric vehicles, electric tools, electronic products, energy storage systems and office equipment, etc.

The embodiments of the present application will be described in detail with reference to the examples hereinafter, but it should be understood by the skilled in the art that the following examples are only used for illustration of the present application and should not be regarded as limiting the scope of the present application. The specific conditions not specified in the examples are all conventional conditions or the conditions recommended by the manufacturer. Reagents or instruments not specified with manufacturers are all commercially available conventional products.

The main differences in the compositions and the parameters of preparation methods of the positive electrode materials for the sodium-ion batteries in Examples 1-15 and Comparative Examples 1-9 are shown in Tables 1 and 2.

**Table 1**

| Group | Element M | M-O bond energy (kJ/ mol) | Element A | Ionic radius (nm) | Chemical general formula | First heat preservation sintering | Second heat preservation sintering | Third heat preservation sintering |
|---|---|---|---|---|---|---|---|---|
| Exam ple 1 | Al | 1582. 3 | Y | 0.09 | NaNi_{0.33}Fe_{0.33}Mn_{0.33}Al_{0.005}Y_{0.00 5}O₂ | 650°C, 2h | 880°C, 2h | 945°C, 12h |
| Exam ple 2 | Al | 1582. 3 | Zr | 0.07 2 | NaNiO_{0.33}Fe_{0.33}Mn_{0.33}Al_{0.005}Zr_{0.0 05}O₂ | 650°C, 2h | 880°C, 2h | 945°C, 12h |
| Exam ple 3 | Al | 1582. 3 | Ce | 0.08 7 | NaNi_{0.33}Fe_{0.33}Mn_{O.33}Al_{0.005}Ce_{0.0 05}O₂ | 650°C, 2h | 880°C, 2h | 945°C, 12h |
| Exam ple 4 | Al | 1582. 3 | Y | 0.09 | NaNi_{0.33}Fe_{0.33}Mn_{O.33 0.005}Yo._{00 5}O₂ | 600°C, 2h | 880°C, 2h | 980°C, 12h |
| Exam ple 5 | Al | 1582. 3 | Y | 0.09 | NaNi_{0.33}Fe_{0.33}Mn_{0.33}Al_{0.005}Y_{0.00 5}O₂ | 690°C, 2h | 880°C, 2h | 945°C, 12h |
| Exam ple 6 | Al | 1582. 3 | Y | 0.09 | NaNi_{0.33}Fe_{0.33}Mn_{0.33}Al_{0.005}Y_{0.00 5}O₂ | 650°C, 2h | 860°C, 2h | 945°C, 12h |
| Exam ple 7 | Al | 1582. 3 | Y | 0.09 | NaNi_{0.33}Fe_{0.33}Mn_{0.33}Al_{0.005}Y_{0.00 5}O₂ | 650°C, 2h | 890°C, 2h | 945°C, 12h |
| Exam ple 8 | Al | 1582. 3 | Y | 0.09 | NaNi_{0.33}Fe_{0.33}Mn_{0.33}Al_{0.005}Y_{0.00 5}O₂ | 650°C, 2h | 880°C, 2h | 945°C, 12h |
| Exam ple 9 | Ti | 888.8 | Nb | 0.06 8 | NaNi_{0.33}Fe_{0.33}Mn_{O},₃₃Ti_{0.005}Nb_{0.0 05}O₂ | 600°C, 3h | 850°C, 3h | 930°C, 16h |
| Exam ple 10 | Si | 1042. 8 | Sb | 0.06 | NaNi_{0.33}Fe_{0.33}Mn_{0.33}Si_{0.005}Sb_{0.0 05}O₂ | 700°C, 1h | 900°C, 1h | 950°C, 14h |
| Exam ple 11 | Mg | 569.3 | Te | 0.09 7 | NaNi_{0.33}Fe_{0.33}Mn_{0.33}Mg_{0.005}Te_{0. 005}O₂ | 650°C, 2h | 880°C, 2h | 945°C, 12h |
| Exam ple 12 | W | 764.1 | La | 0.10 3 | NaNi_{0.33}Fe_{0.33}Mn_{0.33}W_{0.005}La_{0.0 05}O₂ | 650°C, 2h | 880°C, 2h | 945°C, 12h |
| Exam ple 13 | Mg and W | 569.3 and 764.1 | Ta | 0.06 4 | NaNi_{0.33}Fe_{0.33}Mn_{0.33}W_{0.0025}Mg_{0 .0025}Y_{0.005}O₂ | 650°C, 2h | 880°C, 2h | 945°C, 12h |
| Exam ple 14 | Al | 1582. 3 | Y | 0.09 | NaNi_{0.4}Fe_{o.2}Mn_{0.4}Al_{0.005}Y_{0.005}O 2 | 650°C, 2h | 880°C, 2h | 945°C, 12h |
| Exam ple 15 | Al and Si | 1582. 3 and 1042. 8 | Y | 0.09 | NaNi_{0.33}Fe_{0.33}Mn_{0.33}Al_{0.0023}Si_{0.0 025}Y_{0.003}O₂ | 650°C, 2h | 880°C, 2h | 945°C, 12h |

**Table 2**

| Group | Element M | M-O bond energy kJ/mol | Element A | Ionic radius /nm | Chemical general formula | First heat preservation sintering | Second heat preservation sintering | Third heat preservation sintering |
|---|---|---|---|---|---|---|---|---|
| Comparative Example 1 | Al | 1582.3 | Y | 0.09 | NaNi_{0.33}Fe_{0.33}Mn_{0.33}Al_{0.005}Y_{0.005}O₂ | / | 880°C, 2h | 945°C, 12h |
| Comparative Example 2 | Al | 1582.3 | Y | 0.09 | NaNi_{0.33}Fe_{0.33}Mn_{0.33}Al_{0.005}Y_{0.005}O₂ | 650°C, 2h | / | 945°C, 12h |
| Comparative Example 3 | / | / | Y | 0.09 | NaNi_{0.33}Fe_{0.33}Mn_{0.33}Y_{0.01}O₂ | 650°C, 2h | 880°C, 2h | 945°C, 12h |
| Comparative Example 4 | Al | 1582.3 | / | / | NaNi_{0.33}Fe_{0.33}Nn_{0.33}Al_{0.01}O₂ | 650°C, 2h | 880°C, 2h | 945°C, 12h |
| Comparative Example 5 | Cu | 129.7 | Y | 0.09 | NaNi_{0.33}Fe_{0.33}Mn_{0.33}Cu_{0.005}Y_{0.005}O₂ | 650°C, 2h | 880°C, 2h | 945°C, 12h |
| Comparative Example 6 | Co | 214.0 | Y | 0.09 | NaNi_{0.33}Fe_{0.33}Mn_{0.33}C_{0.005}Y_{0.005}O₂ | 650°C, 2h | 880°C, 2h | 945°C, 12h |
| Comparative Example 7 | Al | 1582.3 | v | 0.054 | NaNi_{0.33}Fe_{0.33}Mn_{0.33}Al_{0.005}V_{0.005}O₂ | 650°C, 2h | 880°C, 2h | 945°C, 12h |
| Comparative Example 8 | Al | 1582.3 | Y | 0.09 | NaNi_{0.33}Fe_{0.33}Mn_{0.33}Al_{0.005}Y_{0.005}O₂ | 750°C, 2h | 920°C, 2h | 945°C, 12h |
| Comparative Example 9 | Al | 1582.3 | Y | 0.09 | NaNi_{0.33}Fe_{0.33}Mn_{0.33}Al_{0.005}Y_{0.005}O₂ | 550°C, 2h | 800°C, 2h | 945°C, 12h |

The "/" indicates the absence of this parameter, meaning the omission of the element or step.

The preparation method of the positive electrode materials for the sodium-ion battery of Examples 1-15 and Comparative Examples 1-9 specifically includes the following steps:
Adding a nickel-iron-manganese precursor and a sodium source in a molar ratio of the nickel-iron-manganese precursor to sodium element of 1:1, and then adding an additive containing an element M and an additive containing an element A calculated according to the general formula in Table 1 or 2, and then performing a first heat preservation sintering, a second heat preservation sintering and a third heat preservation sintering in air. Where, the first heat preservation sintering have a heating rate of 3 °C/min, the second heat preservation sintering have a heating rate of 2 °C/min, and the third heat preservation sintering have a heating rate of 1 °C/min, and the material after the heat preservation sinterings is successively mechanically crushed, sieved, iron-removed and packaged to obtain a positive electrode material for a sodium-ion battery.

It is worth noting that if Examples and Comparative Examples do not have a corresponding parameter in Tables 1 and 2 respectively, the corresponding step is omitted in the preparation method.

### Examples 16-30

Each positive electrode material for the sodium-ion battery prepared in Examples 1-15 was mixed with Al₂O₃, and then the mixture was subjected to a fourth heat preservation sintering at 400° C in air for 12 h to obtain a positive electrode material for the sodium-ion battery with a coating layer.

It is understood that Examples 16-30 are in one-to-one correspondence with the Examples 1-15. That is, the material of Example 1 was coated to obtain Example 16, the material of Example 2 was coated to obtain Example 17, and so on, until the material of Example 15 was coated to obtain Example 30.

### Experimental Example 1

Each positive electrode material for the sodium-ion battery prepared in Examples 1-15 and Comparative Examples 1-9 was subjected to XRD test, and the Na-O interlayer spacing of each positive electrode material for the sodium-ion battery is shown in Table 3.

**Table 3**

| Group | Na-O interlayer spacing/Å |
|---|---|
| Example 1 | 3.34 |
| Example 2 | 3.38 |
| Example 3 | 3.30 |
| Example 4 | 3.40 |
| Example 5 | 3.33 |
| Example 6 | 3.39 |
| Example 7 | 3.42 |
| Example 8 | 3.31 |
| Example 9 | 3.35 |
| Example 10 | 3.33 |
| Example 11 | 3.34 |
| Example 12 | 3.38 |
| Example 13 | 3.35 |
| Example 14 | 3.32 |
| Example 15 | 3.34 |
| Comparative Example 1 | 3.20 |
| Comparative Example 2 | 3.17 |
| Comparative Example 3 | 3.32 |
| Comparative Example 4 | 3.08 |
| Comparative Example 5 | 3.31 |
| Comparative Example 6 | 3.30 |
| Comparative Example 7 | 3.17 |
| Comparative Example 8 | 3.38 |
| Comparative Example 9 | 3.30 |

It can be seen from Table 3 that the positive electrode material for the sodium-ion battery provided by the present application had a good Na-O interlayer spacing, which facilitates intercalation and deintercalation of ions in the layered material. In Comparative Examples, since only the element A (Y) was doped in Comparative Example 3, there was no significant effect on the Na-O interlayer spacing. However, in Comparative Example 4 where only the element (Al) was doped, the Na-O interlayer spacing decreased. Additionally, in Comparative Example 7, V element, which has a smaller ionic radius, was used for doping, failing to provide support for the layered material, thereby resulting in a decreased Na-O interlayer spacing. Comparative Examples 5 and 6 also doped with the element Y, but in lower doping amount than Comparative Example 3, leading to a decreased Na-O interlayer spacing. This indicated that the doping with elements M and A have a synergistic effect. The positive electrode material with a large Na-O interlayer spacing can be obtained even when the doping amount of the element A is reduced.

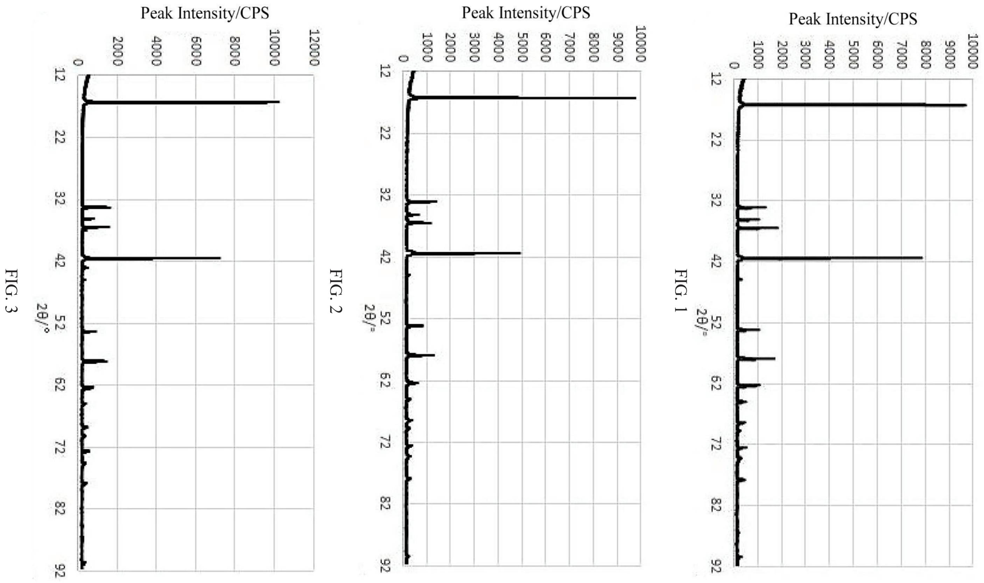

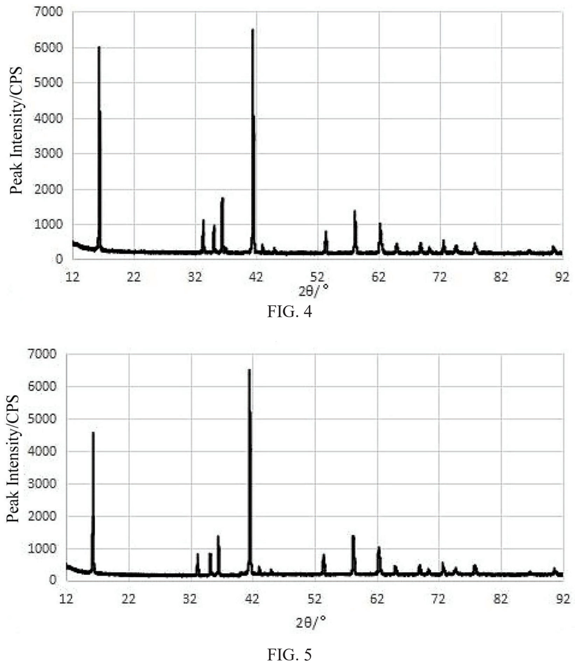

In addition, referring to FIGs. 1, 2, 3 and 4, the first heat preservation sintering and the second heat preservation sintering in Example 1 were omitted in Comparative Examples 1 and 2. Compared with Example 1, NiO/ZnO impurity peaks were generated in Comparative Examples 1 and 2, and the formation of the impurity phases would affect the solid solution effect of the third heat preservation sintering. Compared with Example 1, the Na-O interlayer spacing also decreased. Specifically, FIGs. 1 and 2 were XRD patterns of the positive electrode materials prepared in Examples 1 and 2, and had no obvious diffraction peak in the range of 42.5°-43.5°, indicating that no impurity phase was generated in the positive electrode. FIGs. 3 and 4 were XRD patterns of the positive electrode materials prepared in Comparative Examples 1 and 2, and had no obvious diffraction peak in the range of 42.5°-43.5°, indicating the generation of impurity phases.

### Experimental Example 2 (Performance test of positive electrode material)

The sodium-ion battery was prepared using the positive electrode material for the sodium-ion battery obtained in each of Examples 1-15 and Comparative Examples 1-9 described above, and electrochemical tests were conducted on each sodium-ion battery in terms of battery capacity and cycle performance, with the results shown in Table 4. Meanwhile, the gas generation amount of each battery was tested after being placed at 45°C for 14 days, with the results shown in Table 4.

Where, using a technical solution known to those skilled in the art for preparing a positive electrode material into a lithium-ion battery, the layered materials obtained in the Examples and Comparative Examples were assembled into button cells. The specific method includes: the obtained layered positive electrode material for the sodium-ion battery, acetylene black and polyvinylidene flourine (PVDF) were weighed in a mass ratio of 90:5:5, mixed evenly, and then NMP was added and stirred for 2 h to form a viscous slurry, which was coated evenly on an aluminum foil, vacuum baked at 80°C, pressed into a sheet, and then cut into circular positive electrode sheets with a diameter of 14 mm; a pure sodium sheet with a diameter of 16 mm was used as a negative electrode sheet, ENA-18 (brand: Tianci) was used as an electrolyte, and a PP/PE/PP composite separator was used. A button cell was then assembled in a glove box full of argon.

The electrochemical test includes: initial discharge capacity test at 0.1C, initial coulombic efficiency (initial efficiency) test, and capacity retention rate test after 100 cycles at 45°C.

The initial discharge capacity at 0.1 C: the assembled half-cell was left for 5 h, then was subjected to charging and discharging at 0.1 C/0.1 C by a device from LANHE at a test temperature of 25±1°C and a test voltage of 2.0-4.0V, with a charging cut-off current set at 0.05C, to obtain the charge and discharge capacities.

The first coulombic efficiency: the assembled half-cell was left for 5 h, then was subjected to charging and discharging at 0.1 C/0.1 C by a device from LANHE at a test temperature of 25±1°C and a test voltage of 2.0-4.0V, with a charging cut-off current set at 0.05C, to obtain the charge and discharge capacities, and the first coulombic efficiency was calculated by the obtained discharging capacity/charging capacity.

The capacity retention rate after 100 cycles at 45°C: test was conducted using a Neware CT3008-5V3A-A1, at 45°C, with a cycling voltage of 2-4 V and a constant-voltage cut-off current of 20 mA for 100 cycles, the capacity of each cycle was recorded, and then divided by the capacity of the first cycle, to obtain the cycle retention rate after 100 cycles.

Test method of the gas generation amount of the battery (explanation of the gas generation performance test after 14 days at 45°C): the battery was first fully charged and its volume was measured as V1, then the fully charged battery was stored at a high temperature of 45°C for 14 days and its volume was measured as V2, and an increase rate was calculated with the formula (V2-V1)/V1×100%, where the volume measurement device is an electronic solid density meter TW-120E.

**Table 4**

| Group | Initial discharge capacity at 0.1 C (mAh/g) | First efficiency (%) | Capacity retention rate after 100 cycles at 45°C (%) | Test for gas generation after high-temperature storage for 14 days at 45°C (%) |
|---|---|---|---|---|
| Example 1 | 170.3 | 95.4 | 94.7 | 12.0 |
| Example 2 | 169.6 | 95.5 | 94.8 | 9.8 |
| Example 3 | 168.5 | 94.7 | 95.3 | 11.9 |
| Example 4 | 171.8 | 95.6 | 94.2 | 14.7 |
| Example 5 | 170.8 | 95.0 | 94.5 | 10.1 |
| Example 6 | 171.1 | 95.2 | 94.5 | 12.1 |
| Example 7 | 169.2 | 95.3 | 94.8 | 13.7 |
| Example 8 | 170.1 | 95.2 | 94.6 | 10.7 |
| Example 9 | 171.1 | 95.3 | 94.5 | 11.8 |
| Example 10 | 170.7 | 95.6 | 95.1 | 12.5 |
| Example 11 | 172.1 | 95.7 | 94.8 | 14.3 |
| Example 12 | 170.6 | 95.1 | 94.4 | 11.8 |
| Example 13 | 171.1 | 95.4 | 94.7 | 12.5 |
| Example 14 | 170.8 | 94.7 | 94.2 | 13.5 |
| Example 15 | 170.6 | 94.8 | 94.6 | 12.2 |
| Comparative Example 1 | 158.8 | 90.1 | 87.5 | 20.3 |
| Comparative Example 2 | 153.2 | 88.1 | 89.5 | 25.4 |
| Comparative Example 3 | 167.8 | 93.8 | 90.4 | 27.8 |
| Comparative Example 4 | 148.3 | 87.7 | 85.4 | 54.6 |
| Comparative Example 5 | 170.2 | 95.1 | 84.5 | 38.7 |
| Comparative Example 6 | 168.7 | 95.0 | 84.3 | 39.6 |
| Comparative Example 7 | 161.5 | 94.2 | 87.2 | 24.3 |
| Comparative Example 8 | 170.6 | 95.2 | 94.5 | 15.3 |
| Comparative Example 9 | 170.2 | 95.1 | 94.2 | 14.8 |

It can be seen from Table 4 that the positive electrode material for the sodium-ion battery prepared in Examples of the present application had higher capacity and cycle stability. In Comparative Example 3, due to no addition of element M, oxygen ions were more likely to escape under a high SOC condition, which was manifested as a significant deterioration in cycle performance and gas generation performance, with an increase in gas generation amount. In Comparative Example 4, due to no addition of element A, structural support effect was poor, which was manifested as low capacity and low initial efficiency, as well as a deterioration in cycle performance and gas generation performance, with an increase in gas generation amount. Due to that Cu was introduced to replace M in Comparative Example 5 and Co was introduced to replace M in Comparative Example 6, confinement on oxygen was weaker, both cycle performance and gas generation performance were deteriorated, with an increase in gas generation amount. In Comparative Example 7, V was introduced to replace the doping element A, where V has a small ionic radius, which results in poor support for the layered structure of the positive electrode material, a loss of both capacity and initial efficiency, serious deterioration of the cycle performance and gas generation performance, and an increase in gas generation amount.

In addition, in Comparative Example 9, the temperature of each sintering was lower than the lower limit of the temperature plateau of each heat preservation stage of the present application, and there was a clear diffraction peak in 42.5°-43.5°, as shown in FIG. 5, indicating the generation of the impurity phase.

### Experimental Example 3 (D10 particle diameter test before and after roll pressing)

The D10 particle diameter of the positive electrode material for the sodium-ion battery prepared in each of Examples 1-15 and Comparative Examples 1-9 before and after roll pressing, and the ratio of the D10 particle diameter after roll pressing by a 3T pressure roller to the D10 particle size before roll pressing, were measured, and the results were shown in Table 5.

The specific roll pressing method includes: with TUM7105 equipment having a mold inner diameter of 13 mm, a zero-clearing and calibration were performed firstly on the deformation and displacement of the equipment with a force of 100 N, then 2 g of the material was weighed and placed in the mold, and a pressure of 3T (166 MPa) was applied thereto and held for 10 s, and then the material was taken out.

**Table 5**

| | D10 particle diameter before 3T roll pressing (µm) | D10 particle diameter after 3T roll pressing (µm) | Ratio |
|---|---|---|---|
| Example 1 | 4.7 | 3.8 | 0.809 |
| Example 2 | 4.6 | 3.6 | 0.783 |
| Example 3 | 4.7 | 3.9 | 0.830 |
| Example 4 | 4.7 | 3.5 | 0.745 |
| Example 5 | 4.6 | 4.1 | 0.891 |
| Example 6 | 4.9 | 3.8 | 0.776 |
| Example 7 | 4.7 | 3.7 | 0.787 |
| Example 8 | 4.6 | 3.7 | 0.804 |
| Example 9 | 4.7 | 4 | 0.851 |
| Example 10 | 4.5 | 3.6 | 0.800 |
| Example 11 | 4.8 | 3.7 | 0.771 |
| Example 12 | 4.6 | 3.8 | 0.826 |
| Example 13 | 4.6 | 3.4 | 0.739 |
| Example 14 | 4.7 | 3.5 | 0.745 |
| Example 15 | 4.6 | 3.6 | 0.783 |
| Comparative Example 1 | 4.5 | 3 | 0.667 |
| Comparative Example 2 | 4.6 | 3.2 | 0.696 |
| Comparative Example 3 | 4.7 | 3.1 | 0.660 |
| Comparative Example 4 | 4.8 | 0.6 | 0.125 |
| Comparative Example 5 | 4.7 | 3.3 | 0.702 |
| Comparative Example 6 | 4.8 | 3.4 | 0.708 |
| Comparative Example 7 | 4.5 | 1.2 | 0.267 |
| Comparative Example 8 | 4.7 | 3.7 | 0.787 |
| Comparative Example 9 | 4.6 | 3.6 | 0.783 |

It can be seen from Table 5 that the positive electrode material for the sodium-ion battery prepared in Examples of the present application had a stable structure, and a small change in the D10 particle diameter before and after roll pressing, which indicates that the positive electrode material for the sodium-ion battery prepared in the Examples has a high structure strength. However, the positive electrode material for the sodium-ion battery prepared in Comparative Examples showed a significant decrease in the D10 particle diameter after roll pressing, indicating that the material has a low hardness.

The thickness of the coating layer in the materials prepared in Examples 16-30 was measured by transmission electron microscopy observation method, and the measured data were shown in Table 6.

**Table 6**

| | Thickness of coating layer (nm) |
|---|---|
| Example 16 | 25 |
| Example 17 | 22 |
| Example 18 | 29 |
| Example 19 | 27 |
| Example 20 | 23 |
| Example 21 | 27 |
| Example 22 | 24 |
| Example 23 | 20 |
| Example 24 | 23 |
| Example 25 | 22 |
| Example 26 | 26 |
| Example 27 | 23 |
| Example 28 | 28 |
| Example 29 | 25 |
| Example 30 | 19 |

It can be seen from Table 6 that the thickness of the coating layer of Examples 16-30 was less than 50 nm.

In summary, in the positive electrode material for the sodium-ion battery provided by the present application, by introducing the element M and the element A, the gas generation problem during cycling of the positive electrode sheet can be effectively improved, and meanwhile the capacity and cycling life of the material can be improved.

Although the present application has been illustrated and described with reference to the specific examples, it should be realized that the above-mentioned examples are only used to illustrate, rather than to limit, the technical solutions of the present application. Those ordinary skilled in the art should understand that: in a case of not departing from the spirit and scope of the present application, the technical solutions recited in the aforementioned examples can be amended, or some or all of the technical features therein can be replaced equivalently. However, such amendments or replacements do not make the essence of the corresponding technical solutions deviate from the scope of the technical solutions in the examples of the present application. Therefore, this indicates that the appended claims include all of these replacements and amendments falling within the scope of the present application.

## Claims

1. A positive electrode material for a sodium-ion battery, wherein the positive electrode material for the sodium-ion battery has a chemical general formula NaₐNi_{b}Fe_{c}Mn_{d}M_{c}A_{f}O₂, wherein 0.85≤a≤1.1, 0.1≤b≤0.5, 0.1≤c≤0.4, 0.1≤d≤0.4, 0.001≤e≤0.02, 0.001≤f≤0.02; the element M and the element A are doping elements, M-O of the element M has a bond energy of greater than 500 kJ/mol, the element A has an ionic radius of greater than or equal to 0.06 nm, and the element A has a valence state of +3 of higher; a XRD pattern of the positive electrode material for the sodium-ion battery is free of impurity phase diffraction peak in a range of 42.5°-43.5°.

2. The positive electrode material for the sodium-ion battery according to claim 1, wherein the bond energy of M-O of the element M is greater than 700 kJ/mol.

3. The positive electrode material for the sodium-ion battery according to claim 1, wherein the ionic radius of the element A is 0.06 nm - 0.11 nm.

4. The positive electrode material for the sodium-ion battery according to claim 1, wherein the XRD pattern of the positive electrode material for the sodium-ion battery has no NiO and/or ZnO diffraction peaks in a range of 42.5°-43.5°.

5. The positive electrode material for the sodium-ion battery according to claim 1, wherein the element M comprises at least one of Al, Nb, Mg, Si, W and Ti.

6. The positive electrode material for the sodium-ion battery according to claim 5, wherein the element M comprises at least two of Al, Nb, Mg, Si, W and Ti.

7. The positive electrode material for the sodium-ion battery according to claim 1, wherein the element A comprises at least one of Y, Zr, Nb, Sb, Te, La, Ce and Ta.

8. The positive electrode material for the sodium-ion battery according to claim 1, wherein a Na-O interlayer spacing in the positive electrode material for the sodium-ion battery is 3.30 Å - 3.50 Å.

9. The positive electrode material for the sodium-ion battery according to any one of claims 1-8, wherein the positive electrode material for the sodium-ion battery further comprises a coating layer covering at least part of a surface of the material having the chemical general formula NaₐNi_{b}Fe_{c}Mn_{d}MₑA_{f}O₂; and
the coating layer comprises at least one of Al₂O₃, WO₃, SrO, CeO₂ and TiO₂.

10. The positive electrode material for the sodium-ion battery according to claim 9, wherein the coating layer has a thickness of less than or equal to 50 nm.

11. The positive electrode material for the sodium-ion battery according to any one of claims 1-8, wherein a ratio of D10 particle diameter after roll pressing by a 3T pressure roller to D10 particle diameter before roll pressing is greater than or equal to 0.73.

12. A preparation method of the positive electrode material for the sodium-ion battery according to any one of claims 1-11, comprising the following steps:
mixing a nickel-iron-manganese precursor, a sodium source, a first additive containing an element M and a second additive containing an element A, and then sintering, to obtain the positive electrode material for the sodium-ion battery;
wherein the sintering specifically comprises: a first heat preservation sintering at 600°C-750°C, a second heat preservation sintering at 850°C-920°C, and a third heat preservation sintering at 930°C-980°C.

13. The preparation method of the positive electrode material for the sodium-ion battery according to claim 12, wherein a temperature of the first heat preservation sintering is 600°C-700°C, and a temperature of the second heat preservation sintering is 850°C-900°C.

14. The preparation method of the positive electrode material for the sodium-ion battery according to claim 12 or 13, wherein a time of the first heat preservation sintering is 1 h - 3 h;
and/or a time of the second heat preservation sintering is 1 h - 3 h;
and/or a time of the third heat preservation sintering is 12 h - 16 h.

15. The preparation method of the positive electrode material for the sodium-ion battery according to any one of claims 12-14, wherein after the third heat preservation sintering, the preparation method further comprises: crushing the sintered material, adding a coating layer material thereto, and performing a fourth heat preservation sintering.

16. The preparation method of the positive electrode material for the sodium-ion battery according to claim 15, wherein a temperature of the fourth heat preservation sintering is 400°C-450°C;
and/or a time of the fourth heat preservation sintering is 12 h - 16 h.

17. A positive electrode sheet for a sodium-ion battery, comprising the positive electrode material for the sodium-ion battery according to any one of claims 1-11.

18. A sodium-ion battery, comprising the positive electrode sheet for the sodium-ion battery according to claim 17.

19. An electrical device, comprising the sodium-ion battery according to claim 18.
